# EUROPÄISCHE PATENTSCHRIFT

(11) **EP 1 693 642 B1**
(45) Veröffentlichungstag und Bekanntmachung des Hinweises auf die Patenterteilung: **27.08.2008**
(21) Anmeldenummer: 05022534.1
(22) Anmeldetag: 15.10.2005
(51) Int. Cl.: F41H 11/12

(54) **Luftgestütztes Verfahren zur Detektion von Landminen**
Method for detecting land mines from the air
Procédé pour la détection des mines terrestres par voie aérienne

(30) Priorität: 18.02.2005 DE 102005007723
(43) Veröffentlichungstag der Anmeldung: 23.08.2006
(73) Patentinhaber: Meurer, Heinrich, 50321 Brühl (DE)
(72) Erfinder: Meurer, Heinrich, 50321 Brühl (DE)
(74) Vertreter: Fritz & Brandenburg Patentanwälte

(56) Entgegenhaltungen:
- DE-A1- 19 635 486
- DE-A1- 19 729 483
- US-A- 5 972 638
- US-A1- 2002 140 596
- ZA-A- 9 609 433

## Beschreibung

Die vorliegende Erfindung betrifft ein luftgestütztes Verfahren zur Detektion von Landminen, Blindgängern oder ähnlichen Explosivkörpern unter Einsatz von Fluoreszenzverfahren einschließlich luftgestützter Georeferenzierung der Fundorte mittels eines digitalen Geländemodells.

Mit Landminen versehene Areale stellen eine erhebliche Gefährdung für die Zivilbevölkerung dar. Entsprechendes gilt auch für Areale in denen sogenannte Blindgänger d.h. nicht zur Detonation gebrachte Granaten, Bomben oder andere Explosivkörper befindlich sind. Auch Letztere stellen eine erhebliche Gefahr dar, da der Zündmechanismus durch äußere Einwirkungen wie Befahren oder Betreten des entsprechenden Areals ausgelöst werden kann. Soweit im Folgenden der Begriff Minen verwendet wird, so umfaßt er alle sich in einem Areal befindlichen Explosivkörper.

Mit Minen bestückte Areale stellen auch Jahrzehnte nach Beendigung der Kampfhandlungen oder der Verlegung ein erhebliches Risiko für die Zivilbevölkerung dar. So sind beispielsweise Minenfelder, die während des Zweiten Weltkrieges angelegt wurden, bis zum heutigen Tage in Teilen Europas und Afrikas nicht nutzbar. Das gleiche gilt auch für minenverdächtige Areale, von denen nicht klar ist, ob hierin Minen befindlich sind und die aus Sicherheitsgründen dementsprechend unzugänglich gemacht werden. Zu der unmittelbaren Gefährdung von Personen kommen noch erhebliche wirtschaftliche Nachteile, bedingt durch die Nichtnutzbarkeit der betroffenen Areale, beispielsweise für die Landwirtschaft oder den Verkehr.

Hinzu tritt das Problem, daß sich viele mit Minen versehene Areale in Ländern mit geringer Wirtschaftskraft, beispielsweise in Afrika oder Südostasien befinden, welche nur geringe oder keine finanziellen Mittel zur Räumung der Minenfelder aufbringen können. Es besteht daher ein dringendes Bedürfnis an effizienten, sicheren und kostengünstigen Verfahren zum Nachweis und zur Räumung von Minenfeldern und Ähnlichem.

Ein bekanntes Verfahren zur Räumung von Minenfeldern besteht im Einsatz von Spürhunden, die die im Erdreich verlegten Minen olfaktorisch aufspüren. Die vom Spürhund angezeigten Minenstandorte werden dann durch einen Entschärfer überprüft und die Mine, soweit vorhanden, entschärft. Dieses Verfahren zeigt jedoch erheblich Nachteile auf. So ist die Zuverlässigkeit der Anzeige durch die Spürhunde sehr begrenzt und mit einer hohen Fehlerquote behaftet. Besonders problematisch ist dabei, daß durch die Spürhunde eine erhebliche Anzahlt von Minen nicht angezeigt wird. So wird üblicherweise ein zu räumendes Areal wenigstens dreimal mit unterschiedlichen Spürhunden abgegangen. Derartige Negativfehler, d.h. ein Nichtanzeigen eines Minenstandortes ist sowohl für den Hund als auch den Hundeführer äußerst bedenklich, da die nichtangezeigte Mine versehentlich betreten und ausgelöst werden kann. Darüber hinaus ist die effektive Einsatzzeit von Minenspürhunden auf wenige Stunden pro Tag beschränkt. Danach läßt die Leistungsfähigkeit der Spürhunde in nicht vertretbarem Maße nach.

Weitere bekannte Methoden sind das kleinteilige, händige Umgraben des Geländes, das Abgehen des zu untersuchenden Areals mit Metalldetektoren oder die mechanische Auslösung von Minen mittels Walzen oder das Erdreich umpflügenden Einrichtungen. Alle diese Verfahren haben jedoch ihre spezifischen Nachteile. Metalldetektoren sprechen nicht auf Plastikminen an, die insbesondere als Personenminen eingesetzt werden und bringen den Bediener damit in Gefahr. Walzen oder das Erdreich umpflügende Einrichtungen sind nur begrenzt einsetzbar in Abhängigkeit der Eignung des jeweiligen Geländes. Darüber hinaus besteht die Gefahr, daß Minen, insbesondere Fahrzeugminen, die für ein mehrfaches Überfahren vor der Auslösung konstruiert sind hiervon nicht ausgelöst und damit unschädlich gemacht werden.

Die GB 2 330 801 beschreibt ein luftgestütztes System zur Beseitigung von Landminen, wobei das zu räumende Areal mit einem Laser illuminiert wird. Ein Sensor registriert ein unterschiedliches Reflektionsverhalten der Landmine oder des Erdreiches oberhalb der Landmine gegenüber der Umgebung. Der so detektierte Minenstandort kann mittels Farbkanone markiert oder die Mine durch Beschuß aus der Luft zur Explosion gebracht werden.

Die US 5,972,638 offenbart ein Verfahren zur Detektion von vergrabenen oder verschütteten Explosivkörpern mittels eines Biosensors. Unter Biosensoren werden dabei Mikroorganismen verstanden, die aufgrund von Manipulationen, insbesondere gentechnischer Art, in die Lage versetzt werden in Anwesenheit von Explosivstoffen zu lumineszieren insbesondere zu fluoreszieren. Das Dokument beschreibt insbesondere Verwendung von rekombinanten Bakterienstämmen der Gruppen Bazillus, Pseudomonas sowie Escherischia Coli als Biosensoren sowie Verfahren zur gentechnischen Manipulation dieser. Die genannten Biosensoren zeigen Lumineszenz-, bzw. Fluoreszenzverhalten in der Anwesenheit von Explosivstoffen, insbesondere Trinitrotoluol, Hexahydro-1,3,5-Trinitro-1,3,5-Triazin sowie Octahydro-1,3,5-Trinitro-1,3,5,7-Tetrazocin.

Zur Durchführung des Verfahrens zur Detektion von vergrabenen Explosivkörpern wird eine Lösung, enthaltend den Biosensor über dem zu untersuchenden Areal ausgesprüht, vorzugsweise mittels eines Luftfahrzeuges. Es folgt eine hinreichende Einwirkzeit der Mikroorganismen in dem zu untersuchenden Areal.

Die Detektion erfolgt mittels einer CCD-Kamera bei Dämmerungslicht. Hierzu wird wechselweise der Nahraum um die Kamera mit UV-Licht bestrahlt. Das Kamerasystem nimmt dabei sowohl Bilder unter UV-Bestrahlung als auch ohne auf, wonach nach entsprechender Bildbearbeitung die jeweiligen Lageorte der Explosivkörper durch die UV-Fluoreszenz erkannt werden.

Die Fluoreszenzlampe sowie das Aufnahmesystem können von einem Bediener getragen werden. Alternativ ist die Installation auf einem Roboter möglich. Das System weist den Nachteil auf, dass das Minenfeld oder eine Verdachtsfläche betreten oder befahren werden muss, sowie aufgrund der beschränkten Reichweite nur kleine Areale in einem Arbeitsschritt kontrolliert werden können. Darüber hinaus ist das tägliche Arbeitsfenster auf wenige Stunden der Dämmerung sowohl zum Tagesbeginn als auch zum Tagesende beschränkt.

Biosensoren zur Bestimmung von Sprengstoffen sind auch aus der DE 41 26 692, WO 02/068473, WO 97/03201 bekannt. Die WO 99/34212 beschreibt ebenfalls Herstellungsverfahren und Verwendung von fluoreszierenden Biosensoren, geeignet zur Sprengstoffdetektion.

Aufgabe der vorliegenden Erfindung ist es die Nachteile des Standes der Technik zu überwinden und ein Verfahren zur Detektion von Landminen und anderen Explosivkörpern, insbesondere vergrabenen Landminen und Explosivkörpern, bereitzustellen, bei dem unter Verwendung von Biosensoren ein minenverdächtiges Areal luftgestützt und mit hoher Geschwindigkeit sowie Genauigkeit geprüft wird. Weitere Teilaufgabe der vorliegenden Erfindung ist es ein Verfahren bereitzustellen, das eine Kartographierung der Lageorte der Explosivkörper mittels hochpräziser Georeferenzierung durchgeführt wird.

Gelöst werden die Aufgaben nach dem technischen Merkmal des unabhängigen Anspruches.

Die vorliegende Erfindung stellt ein Verfahren zur Detektion der Lage von Minen und Explosivkörpern aus der Luft bereit, mittels Verwendung luftgestützter Laserscanner in Kombination von Sprengstoff sensitiven Biosensoren unter gleichzeitiger hochpräziser Georeferenzierung unter Bezugnahme auf ein digitales Geländemodell.

Die vorliegende Erfindung geht aus von der an sich bekannten Verwendung von Sprengstoff sensitiven Biosensoren auf der Basis von manipulierten Mikroorganismen, nachfolgend vereinfacht Biosensoren genannt. Geeignete Biosensoren sind beispielsweise in der US-5,972,638 beschrieben.

Bei dem erfindungsgemäßen Verfahren werden wässrige Lösungen der Kulturen der Biosensoren in geeigneter Weise ausgebracht. Eine bekannte Möglichkeit zum gefahrlosen Ausbringen besteht in der Verwendung von Sprühflugzeugen, die ein Aerosol oder einen Sprühnebel der wäßrigen Kultur über dem zu untersuchenden Areal ausbringen.

Es schließt sich eine Wirkperiode an, in der die als Biosensoren wirkenden Mikroorganismen mit den Explosivstoffen wechselwirken, die sich im Umfeld der zu detektierenden Minen oder Explosivkörper befinden. Dabei wird von dem bekannten Fakt Gebrauch gemacht, daß Minen oder andere Explosivkörper geringfügige Mengen des Explosivstoffes in die Nahumgebung abgeben. Nach hinreichender Wechselwirkung der Biosensoren mit den Explosivstoffen sind diese aktiviert und zur Detektion bereit. Hier setzt die vorliegende Erfindung an.

Erfindungsgemäß erfolgt die Detektion mittels luftgestütztem Laserscanner, mit modifiziertem Laser für die Anregung fluoreszenter Strahlung bei Biosensoren am Boden in Kombination mit der luftgestützten Detektion und Georeferenzierung der fluoreszierenden Strahlung am Boden mittels bildgebender Verfahren des Laserscanners sowie optional der Darstellung detailgetreuer Minenfeldkarten zur sicheren Orientierung und Ansprache von Landminen durch Minenräumer am Boden.

Dabei findet ein luftgestützter Laserscanner Verwendung, um während des Fluges eine kontinuierliche Höhenvermessung des überflogenen zu vermessenden Areals vorzunehmen. In grundsätzlich bekannter Weise wird durch den Laserscanner mittels Laufzeitmessungen seiner vom Boden reflektierten Laserimpulse die jeweiligen Höhen bestimmt. Dieses Signal wird nachfolgend Oberflächenreflektionssignal genannt. Gleichzeitig wird jeder einzelnen Höhenmessung eine genaue geographische Position des Luftfahrzeuges zugeordnet. Die geographische Position kann mittels DGPS (Differential Global Positioning System), insbesondere in Kombination mit einer hochpräzisen Trägheitsnavigation, bestimmt werden.

Aus den gewonnenen Höhendaten, korreliert mit den jeweiligen Positionsdaten, wird ein digitales Geländemodell hoher Auflösung erzeugt, welches das überflogene Areal in seiner Oberfläche präzise abbildet.

In einer besonderen Ausführungsform kann durch Unterscheidung zwischen einer ersten und einer letzten Reflektion eines mehrfach vom Boden reflektierten Laserimpulses zwischen der Bodenoberfläche einerseits sowie der auf der Oberfläche aufstehenden Vegetation oder anderer artefaktischer Objekte unterschieden werden. Nachfolgend wird die Darstellung der unmittelbaren Bodenoberfläche als digitales Bodenmodell und die Darstellung der Oberfläche mit Vegetation und/oder artefaktischen Objekten als digitales Oberflächenmodell bezeichnet. In dieser Ausführungsform der Erfindung besteht damit die Möglichkeit in z.B. bewaldeten Gebieten das Bodenrelief als solches darzustellen, ohne störende Darstellung der Vegetation.

In einer weiteren Ausführungsform wird der zuvor genannte luftgestützte Laserscanner mit einer digitalen Zeilenkamera kombiniert. Das so gewonnene visuelle Abbild des überflogenen Areals wird dann mit dem digitalen Bodenmodell und/oder dem digitalen Oberflächenmodell kombiniert oder überlagert. Die Anwendungsvorteile hierzu werden im Folgenden noch erläutert.

Zur Umwandlung des digitalen Höhenmodells in das digitale Bodenmodell und/oder digitale Oberflächenmodell werden die gemessenen Datensätze einem Raster zugeordnet. Die gemessenen Datensätze bestehen dabei, wie zuvor ausgeführt, aus den Höhendaten, welche mit den geographischen Daten korreliert sind. Die Rasterweite des so gewonnenen Rasters stellt ein wesentliches Merkmal der vorliegenden Erfindung dar. Die Rasterweite, also die horizontale Auflösung des Modells, sollte nicht unter 0,25 Metern liegen. Eine größere Rasterweite führt zu erheblichen Unsicherheiten bei dem späteren Auffinden der realen Mine im zu räumenden Areal.

Andererseits ist eine Auflösung von 0,25 Metern oder kleiner hinreichend. Eine derartige horizontale Auflösung von 0,25 Metern kann im Gelände nur unter günstigsten Umständen von Minenhunden oder durch das pendelnde Führen von Magnetsonden zum Nachweis metallischer Landminen erzielt werden.

Geeignete Laserscanner zum Erreichen einer horizontalen Auflösung von 0,25 Metern oder weniger sind im Markt erhältlich. Beispielhaft seien nur genannt die Laserscanner ALTM 3100 ® der Firma Optech, Kanada und Litemapper 2800 ® der Firma IGI mbH, Deutschland.

Neben der Eignung des zu verwendenden Laserscanners haben auch Flughöhe und Fluggeschwindigkeit des Laserscanners über dem Grund Auswirkungen auf die horizontale Auflösung. Es ist dem Fachmann bekannt, daß bei Überschreiten der zuvor genannten Auflösung von 0,25 Metern oder weniger die Auflösung verbessert werden kann, soweit Fluggeschwindigkeit und/oder Flughöhe verringert werden.

Ein weiterer Kunstgriff der vorliegenden Erfindung besteht darin, die Emissionswellenlänge des Lasers auf die Anregungswellenlänge der Biosensoren einzustellen. Durch diese Maßnahme werden die Biosensoren angeregt und zur Abgabe einer detektierbaren Fluoreszenzerscheinung veranlaßt, soweit sie durch den Kontakt mit Explosivstoffen aktiviert sind. Die detektierbare Fluoreszenzerscheinung wird nachfolgend auch Fluoreszenzsignal genannt. Diese sogenannte Sekundärstrahlung wird in einer in Abhängigkeit der Biosensoren definierten Wellenlänge emitiert. Dabei ist die Wellenlänge der Sekundärstrahlung ungleich der Anregungswellenlänge. In Abhängigkeit des Biosensors und damit des gewählten Fluorophors ist die Sekundärstrahlung üblicherweise 30 bis 60 nm langwelliger als die Anregungsstrahlung. Hieraus ergibt sich in vorteilhafter Weise, daß bei einem Laserimpuls mit definierter Wellenlänge, die der Anregungswelle des Biosensors entspricht, zwei Signale unterschiedlicher Wellenlängen erhalten werden. Das erste Signal (Oberflächenreflektionssignal) weist dabei die gleiche Wellenlänge wie die Anregungswellenlänge auf und dient in der zuvor beschriebenen Weise zur Georeferenzierung des Meßpunktes. Das zweite Signal (Fluoreszenzsignal) ist langwelliger und zeigt die Anwesenheit von aktivierten Biosensoren und damit indirekt von Explosivstoffspuren am Meßpunkt an. Als Folge hiervon bedarf es nur eines Anregungssignals einer Wellenlänge. Auf die Verwendung eines zweiten Lasers mit einer anderen Wellenlänge zur Detektion des Oberflächenreflektionssignals kann verzichtet werden.

In einer weiteren Ausführungsform können Laserimpulse unterschiedlicher Wellenlänge verwendet werden. Laserimpulse unterschiedlicher Wellenlänge im Sinne der vorliegenden Erfindung sind wenigstens zwei Laserimpulse, die zeitgleich oder nahezu zeitgleich zu einem Meßpunkt abgesendet werden, wobei einer der Laserimpulse die Anregungswellenlänge des Biosensors aufweist und der andere Laserimpuls eine davon abweichende Wellenlänge aufweist und wobei weiterhin der zuletzt genannte Laserimpuls zur Erzeugung der Oberflächenreflektion dient. In dieser Ausführungsform sind die Wellenlänge der Signale der Biosensoren sowie von der Oberfläche weiter voneinander beabstandet. Ein größerer Abstand der Wellenlängen der zu detektierenden Signale vereinfacht die Diskriminierung und somit die Detektion.

In einer weiteren Unterausführungsform der zuletzt genannten Ausführungsform können auch mehrere Laserimpulse unterschiedlicher Wellenlänge zur Anregung der Biosensoren verwendet werden. Die zuletzt genannte Maßnahme ist zweckmäßig, soweit wenigstens zwei unterschiedliche Biosensoren gleichzeitig zum Einsatz kommen, die unterschiedliche Anregungswellenlängen aufweisen.

Soweit gemäß dieser Unterausführung zwei Biosensoren mit unterschiedlicher Anregungswellenlänge beim Einsatz Verwendung finden, so wären drei Laserimpulse mit unterschiedlichen Wellenlängen zweckmäßig. Zwei der Laserimpulse dienen dabei zur Erzeugung des Fluoreszenzsignals und der dritte zur Erzeugung des Oberflächenreflektionsignals. Soweit mehr als zwei Biosensoren mit unterschiedlicher Anregungswellenlänge zeitgleich Verwendung finden, so ist entsprechend zu verfahren.

Die zeitgleiche Verwendung von mehreren Biosensoren mit unterschiedlicher Anregungswellenlänge kann dazu dienen unterschiedliche Minen, bzw. Explosivkörper zu detektieren, die unterschiedliche Explosivstoffe enthalten, soweit die Biosensoren selektiv für die jeweiligen Explosivstoffe sind.

Erfindungsgemäß weist der Laserscanner eine Detektionseinheit auf, die geeignet ist die Signale mit unterschiedlicher Wellenlänge diskriminierend zu detektieren. Geeigneter Weise weist die Detektionseinheit einen Wellenlängen diskriminierenden Sperrfilter auf, der geeignet ist, in hinreichend kurzen zeitlichen Abständen die Messungen in den zuvor genannten beiden Wellenlängenbereichen durchzuführen. In einer anderen Ausführungsform weist die Detektionseinrichtung zwei gesonderte Detektoren auf, die jeweils spezifisch die jeweiligen genannten Signale mit den spezifischen Wellenlängen detektieren.

In einer weiteren Ausführungsform weist der Laserscanner eine separate Laseranregung für die Biosensoren sowie eine separate Detektionseinrichtung für die Emissionswellenlänge der Biosensoren auf, die beide auf der Plattform des Laserscanners integriert sind und so ebenfalls mit der Präzision des Laserscanner georeferenziert werden.

Die Vorteile aus dem zuvor Genannten liegen auf der Hand. Nach der Impfung des zu untersuchenden Areals mit den Biosensoren kann in einem einzigen Meßgang, d.h. Überflug über das zu untersuchende Areal, sowohl eine Georeferenzierung durchgeführt werden, als auch unmittelbar die darin befindlichen Standorte der Minen bzw. Explosivkörper festgestellt werden. Ein weiterer wesentlicher Vorteil besteht darin, daß keine Meßungenauigkeiten hinsichtlich der geographischen Lage auftreten können. Das detektierte Fluoreszenzsignal korreliert unmittelbar mit dem georeferenzierenden Oberflächenreflektonssignal, womit der Minenstandort eindeutig in dem digitalen Bodenmodell, bzw. digitalen Oberflächenmodell angegeben ist.

Weitere Vorteile des erfindungsgemäßen Verfahrens sowie Systems ergeben sich aus den weiteren Ablaufschritten zur Minenräumung.

Im Folgenden wird das gewonnene digitale Bodenmodell und/oder digitale Oberflächenmodell mit dem nun darin verzeichneten Minenstandorten auf ein tragbares Datendarstellungsgerät, z.B. einen Laptop übertragen. Dabei kann optional das optional gewonnene visuelle Abbild des Areals mit dem Bodenmodell und/oder Oberflächenmodell kombiniert oder überlagert werden.

Die eigentliche Minenräumung wird nun in herkömmlicher Weise durch einen Minensucher/Minenentschärfer durchgeführt. Dabei kann sich der Minensucher mittels des auf dem tragbaren Datensichtgerätes dargestellten Bodenmodell und/oder Oberflächenmodell, insbesondere in Kombination mit der optionalen visuellen Darstellung sicher durch das Areal bewegen. Die jeweiligen Minenstandorte können aus der Darstellung entnommen werden.

In einer anderen Ausführungsform können die gewonnenen Daten als Kartenmaterial ausgedruckt werden.

Bereits das reine digitale Bodenmodell gibt die Oberfläche des Minenfeldes detailreich wieder und erlaubt somit eine sichere Orientierung unabhängig von Koordinatenangaben. Durch visuellen Abgleich zwischen dem digitalen Bodenmodell und der Realität des Minenfeldes sind prägnante Strukturen sicher wiedererkennbar und in Relation zu Minenstandorten zu setzen. Dazu gehören beispielsweise Strassen, unbefestigte Wege und Pfade, Terrassen, Geländekanten, Geländesenken und -hebungen, bearbeitete sowie unbearbeitete Ackerflächen, Gräben, Bach- und Flussverläufe, Wasserflächen, einzelne Felsen sowie Schützengräben und Explosionstrichter. Letztere auch soweit diese von der Vegetation überwachsen sein sollten.

Das digitale Oberflächenmodell weist ergänzend zu dem digitalen Bodenmodell detailreich die aufstehende Vegetation sowie alle künstlichen Objekte aus. Dazu gehören im Bereich der Vegetation als gut wiedererkennende Referenzobjekte beispielsweise Bäume, Hecken sowie Waldränder. Bei den künstlichen, d.h. artefaktischen Objekten, werden insbesondere Zäune, einzelne Zaunpfähle, Mauereinfriedungen, Häuser, Schuppen, Brunnenanlagen, Masten aller Art sowie Panzerwracks oder ähnliche, semipermanente Objekte die Orientierung im Gelände zusätzlich erleichtern.

In einer weiteren optionalen Ausführungsform kann der Minensucher zeitgleich seine geographische Position mit einem tragbaren DGPS-Navigationssystem bestimmen und dies zu einer optimierten sicheren Wegfindung durch das minenbestückte Areal verwenden. Insbesondere bei der Verwendung eines tragbaren Datensichtgerätes mit entsprechender eigener Rechenkapazität kann durch eine unmittelbare Kopplung des DGPS-Empfängers die Darstellung automatisch so gewählt werden, dass der dargestellte Kartenausschnitt das unmittelbare Nahfeld des derzeitigen Standpunktes des Minensuchers zeigt. Hierzu werden die bei dem Laserscan gewonnenen geographischen Daten herangezogen und mit den aktuellen Angaben, d.h. geographischen Daten des Minensuchers, angezeigt durch das tragbare DGPS―System, korreliert. Selbstverständlich ist auch ein automatischer Abgleich zwischen dem DGPS-System sowie der Darstellungseinheit möglich. Die hierzu notwendigen Techniken sind seit langem aus der Navigationsführung für PKWs unter Zuhilfenahme von GPS-Systemen bekannt.

Die mit einem tragbaren DGPS-System verbundenen Abweichungen zwischen dem exakten wirklichen Standort und dem durch das DGPS-System angezeigten Standort können durch den Minensucher mittels eines einfachen und unmittelbaren Abgleiches des Bodenmodells/ Oberflächenmodells sowie gegebenenfalls des dargestellten visuellen Bildes der Umgebung unmittelbar korrigiert werden.

Die digitalen Modelle des Minenfeldes sind also in hohem Maße vertrauensbildend für den Minensucher und erlauben seine visuelle Nahansprache der Minenstandorte.

In den Fällen, in denen Minen nicht abtransportiert, sondern bereits im Gelände durch Sprengung entschärft werden sollen, ist zu erwarten, dass die Zündung von Schlagladungen an der Bodenoberfläche über den präzise nachgewiesenen Minenstandorten für eine sichere Räumung ausreichend ist. Das zeitaufwendige und gefährliche visuelle Verifizieren der Minen durch Ausgraben kann dann entfallen.

Die vorliegende Erfindung stellt damit ein Verfahren zur sicheren und kostengünstigen Ortung von Minen und Räumung von Minenfeldern bereit. Ebenso eignet sich das Verfahren zur Reduzierung sogenannter Minenverdachtsflächen.

## Patentansprüche

1. Verfahren zur luftgestützten Detektion von erdverlegten Explosivkörpern, insbesondere Landminen, mittels fluoreszenzfähiger Biosensoren, umfassend die Schritte:
a) Ausbringen der Biosensoren auf den zu untersuchenden Areal,
b) Wechselwirken lassen der Biosensoren mit Sprengstoffspuren zu ihrer Aktivierung,
**gekennzeichnet durch** die folgenden Schritte,
c) Anregung der Biosensoren mittels Laserstrahl eines luftgestützten Laserscanners,
d) Geleichzeitige diskrimierende Detektion des Fluoreszenzsignals der Biosensoren sowie des Oberflächenreflektionssignals des Laserstrahles,
e) Erstellen eines digitalen Geländemodells anhand des Oberflächenreflektionssignals und einbinden des Fluoreszenzsignals in das digitale Geländemodell,
f) Darstellung des digitalen Geländemodells auf einem Datensichtgerät oder als Kartenmaterial.

2. Verfahren nach Anspruch 1, **dadurch gekennzeichnet, dass** die in Schritt d) detektierten Signale georeferenziert werden.

3. Verfahren nach Anspruch 1 oder 2, **dadurch gekennzeichnet, dass** in Schritt d) weiterhin ein visuelles Geländeabbild aufgenommen wird, das weiterhin in Schritt e) mit dem digitalen Geländemodell überlagert wird.

4. Verfahren nach einem der vorhergehenden Ansprüche, **dadurch gekennzeichnet, dass** das digitale Geländemodell ein digitales Oberflächenmodell ist.

5. Verfahren nach einem der Ansprüche 1 bis 3, **dadurch gekennzeichnet, dass** das digitale Geländemodell ein digitales Bodenmodell ist.

6. Verfahren nach einem der vorhergehenden Ansprüche, **dadurch gekennzeichnet, dass** der Laserstrahl zur Anregung des Oberflächenreflektionssignals sowie des Fluoreszenzsignals die gleiche Wellenlänge aufweist.

## Claims

1. Procedure for aerial-supported detection of buried explosive bodies, especially of landmines, by means of fluorescent biosensors, comprising the following steps:
a) spreading of the biosensors on the surface of the area to be examined
b) time for interaction of the biosensors with traces of explosives for their activation, **characterised by** the following steps:
c) stimulation of the biosensors through laser radiation by an aerial-supported laser scanner,
d) simultaneously discriminating detection of the fluorescence signal of the biosensors and the surface reflection signal of the laser radiation
e) plotting of a digital terrain model by means of the surface reflection signal and superposition of the fluorescence signal into the digital terrain model
f) representation of the digital terrain model on a data visualization device or as a map

2. Procedure according to claim 1), thereby **characterised** that the signals detected in step d) shall be geo-referenced.

3. Procedure according to claim 1) or 2), thereby **characterised** that in step d) also a visualised image of the terrain is being taken which in step e) will be superposed into the digital terrain model.

4. Procedure according to one of the preceding claims, thereby **characterised** that the digital terrain model is a digital surface model.

5. Procedure according to one of the claims 1) till 3), thereby **characterised** that the digital terrain model is a digital ground model.

6. Procedure according to one of the preceding claims, thereby **characterised** that the laser radiation for the stimulation of the surface reflection signal, as well as the fluorescent signal have the same wavelength.

## Revendications

1. Un procédé pour la détection aérienne de corps explosifs enterrés, spécialement pour la détection de mines, au moyen de capteurs biologiques à indication fluorescente, comprenant les étapes suivantes:
a) collocation des capteurs biologiques sur le terrain à inspecter
b) initier l'interaction des capteurs biologiques avec des traces de matière explosive pour leur activation,
**caractérisé par** les étapes suivantes.
c) stimulation des capteurs biologiques, suscitée par faisceau laser d'un scanneur aérien,
d) détection discriminante simultanée du signal de fluorescence des capteurs biologiques, ainsi que du signal de réflexion de surface du faisceau laser,
e) l'élaboration d'une maquette numérique du terrain, basée sur le signal de réflexion de surface et l'implantation du signal de fluorescence dans la maquette numérique du terrain,
f) la présentation de la maquette numérique du terrain sur une unité d'affichage de données, ou sous forme de cartes.

2. Procédé selon la revendication 1, **caractérisé par le fait que** les signaux ayant été détectés en étape d), obtiennent une référence géographique.

3. Procédé selon les revendications 1 et 2, **caractérisé par le fait que** en étape d) une image visuelle du terrain sera prise en plus, et sera ensuite superposée à la maquette numérique du terrain en étape e).

4. Procédé selon l'une des revendication sus-mentionnée, **caractérisé par le fait que** la maquette numérique du terrain est une maquette numérique de la surface.

5. Procédé selon l'une des revendications de 1 à 3, **caractérisé par le fait que** la maquette numérique du terrain est une maquette numérique du sol.

6. Procédé selon l'une des revendication sus-mentionnée, **caractérisé par le fait que** le faisceau laser provoquant la stimulation du signal de réflexion de surface, ainsi que l'activation du signal de fluorescence, ait la même longueur d'ondes.
